# EUROPÄISCHE PATENTANMELDUNG

(11) **EP 1 965 175 A2**
(43) Veröffentlichungstag der Anmeldung: **03.09.2008**
(21) Anmeldenummer: 08003268.3
(22) Anmeldetag: 22.02.2008
(51) Int. Cl.: G01D 4/00, G01F 15/00, G01F 15/06

(54) **Wasserzähler**

(30) Priorität: 02.03.2007 DE 202007003276 U
(71) Anmelder: Zenner International GmbH & Co. KG, 66121 Saarbrücken (DE)
(72) Erfinder: Lehmann, Alexander, 70184 Stuttgart (DE)
(74) Vertreter: Vièl, Christof

(57) **Zusammenfassung**

Die Erfindung betrifft einen Wasserzähler mit Mitteln zum digitalen Erfassen der Ablesedaten und Mitteln zur Übertragung der Ablesedaten.

Um einen derartigen Wasserzähler dahingehend weiterzubilden, daß ein großer Bereich des Ableseglases sichtbar ist bzw. durch einen Deckel geschützt werden kann, wird erfindungsgemäß vorgeschlagen, daß ein erster Ring zum Einrasten auf der Zählerverschraubung vorgesehen ist, daß ein Reedschuh vorgesehen ist, daß eine Abdeckung für den Reedschuh vorgesehen ist, die mit dem Ring verbindbar ist, und daß an der Abdeckung für den Reedschuh ein schwenkbarer Deckel befestigbar ist, in dem die Mittel zum Übertragen der Ablesedaten integriert sind.

Hierdurch wird eine sehr kompakte Bauweise eines Wasserzählers mit Mitteln zum digitalen Erfassen der Ablesedaten und Mitteln zum Übertragen der Ablesedaten erreicht, bei der praktisch das gesamte Ableseglas sichtbar ist, da ja die Platz beanspruchenden Mittel zum Übertragen der Ablesedaten in den schwenkbaren Deckel integriert sind.

## Beschreibung

Die Erfindung betrifft einen Wasserzähler mit Mitteln zum digitalen Erfassen der Ablesedaten und Mitteln zur Übertragung der Ablesedaten.

Aus der DE 695 29 407 T2 ist eine Datenerfassungseinheit mit einem Sender-Empfänger für die Kommunikation von Informationen zwischen der Datenerfassungseinheit und einer zentralen Datensammeleinheit, Mitteln zum Übertragen von Daten als Antwort auf ein über den Sender-Empfänger empfangenes Signal, Mitteln zum Entnehmen von Abschaltezeitinformationen aus dem über den Sender-Empfänger empfangenen Signal und Mitteln zum nachfolgenden Unterbrechen der Stromversorgung zum Sender-Empfänger für eine Zeitdauer in Abhängigkeit von den Abschaltezeitinformationen bekannt.

Die DE 10 2004 019 930 A1 beschreibt eine Einrichtung zur Datenerfassung und Datenauswertung von Daten einer Ablesestelle mit einem Bildlesegerät in Form einer digitalen Kamera, die mit einem Rechner zur Übertragung der digitalen Bilddaten verbunden ist. Die Funkeinrichtung ist zur Datenübermittlung in beiden Richtungen ausgebildet und besitzt einen dem Bildlesegerät zugeordneten Empfangsteil, mittels welchem die von dem Rechner gesandten Auswertedaten erfaßbar sind. Die Funkeinrichtung kann zur simultanen Datenübermittlung mehrkanalig ausgebildet sein.

Von der Firma sappel SA wird unter der Bezeichnung "PULSAR" ein modular aufgebauter Impulssender, der auf einen Wasserzähler durch Rastverbindung befestigbar ist, so daß die Verbrauchswerte an eine Ablesestelle geleitet werden können. Beim Entfernen des Impulssenders, Hervorrufen eines Magnetfeldes im Bereich des Wasserzählers oder einem Durchtrennen des Kabels wird ein Manipulationsalarm ausgelöst. Bei dieser Vorrichtung wird jedoch ein großer Bereich des Ableseglases des Wasserzählers durch den aufgesetzten Impulssender verdeckt.

Aufgabe der Erfindung ist es, einen Wasserzähler gemäß dem Oberbegriff dahingehend weiterzubilden, daß ein großer Bereich des Ableseglases sichtbar ist bzw. durch einen Deckel geschützt werden kann.

Diese Aufgabe wird erfindungsgemäß dadurch gelöst, daß ein erster Ring zum Einrasten auf der Zählerverschraubung vorgesehen ist, daß ein Reedschuh vorgesehen ist, daß eine Abdeckung für den Reedschuh vorgesehen ist, die mit dem Ring verbindbar ist, und daß an der Abdeckung für den Reedschuh ein schwenkbarer Deckel befestigbar ist, in dem die Mittel zum Übertragen der Ablesedaten integriert sind.

Hierdurch wird eine sehr kompakte Bauweise eines Wasserzählers mit Mitteln zum digitalen Erfassen der Ablesedaten und Mitteln zum Übertragen der Ablesedaten erreicht, bei der praktisch das gesamte Ableseglas sichtbar ist, da ja die Platz beanspruchenden Mittel zum Übertragen der Ablesedaten in den schwenkbaren Deckel integriert sind. Die Ablesedaten werden von dem Reedschuh als Mittel zum digitalen Erfassen der Ablesedaten zu den in dem Deckel befindlichen Mitteln zum Übertragen der Ablesedaten über ein Kabel oder drahtlos übermittelt.

Eine Weiterbildung der Erfindung besteht darin, daß der Reedschuh in einer Vertiefung im Ableseglas angeordnet wird. Dies ermöglicht eine flache Bauweise der Vorrichtung und schützt zudem den Reedschuh von drei Seiten. Der Schutz auf der vierten Seite wird durch die Abdeckung für den Reedschuh sichergestellt.

In diesem Zusammenhang ist es vorteilhaft, daß der Reedschuh an dem Ableseglas befestigt ist.

Diese Befestigung kann beispielsweise durch Verschrauben oder auch durch Verkleben erfolgen.

Es liegt im Rahmen der Erfindung, daß ein etwa halbkreisförmiges Segment an der Oberseite des Rings abnehmbar ist und bei abgenommenen Segment ein Scharnier für einen Standarddeckel zugänglich ist.

Somit kann auf dem Ring statt der Abdeckung für den Reedschuh und des daran befestigten Deckels auch ein Standarddeckel befestigt werden. Ein späteres Nachrüsten bestehender Wasserzähler mit Mitteln zum digitalen Erfassen der Ablesedaten und Mitteln zum Übertragen der Ablesedaten kann somit dadurch erfolgen, daß nach dem Entfernen des Standarddeckels ein Reedschuh aufgebracht wird, dieser mit einer Abdeckung versehen wird und dann ein schwenkbarer Deckel mit den Mitteln zum Übertragen der Ablesedaten befestigt wird.

Weiterhin ist es zweckmäßig, daß Mittel zum Erkennen von Manipulierversuchen vorgesehen sind.

Vorteilhaft ist diesbezüglich, daß die Mittel zum Erkennen von Manipulierversuchen Mittel zum Erkennen eines Magnetfeldes, Mittel zum Detektieren eines Kabelbruches und/oder Mittel zur Detektion eines Entfernens des Deckels mit den Mitteln zum Übertragen der Ablesedaten umfassen.

Nachfolgend wird ein bevorzugtes Ausführungsbeispiel der Erfindung anhand von Zeichnungen erläutert.

Es zeigen
- Fig. 1: eine Explosionsansicht eines erfindungsgemäßen Wasserzählers,
- Fig. 2: eine perspektivische Ansicht eines erfindungsgemäßen Wasserzählers mit einem Standarddeckel,
- Fig. 3: eine perspektivische Ansicht eines erfindungsgemäßen Wasserzählers mit einem Deckel mit Mitteln zum Übertragen von Ablesedaten.

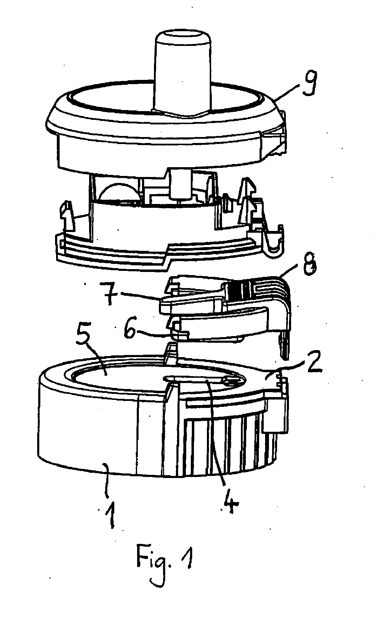

Wie aus Fig. 1 ersichtlich, wird auf die Zählerverschraubung ein erster Ring 1 aufgebracht, der auf seiner Innenseite Rastelemente aufweist, so daß der Ring 1 nach seinem Aufbringen nur bei Zerstörung des Rings 1 wieder entfernbar ist.

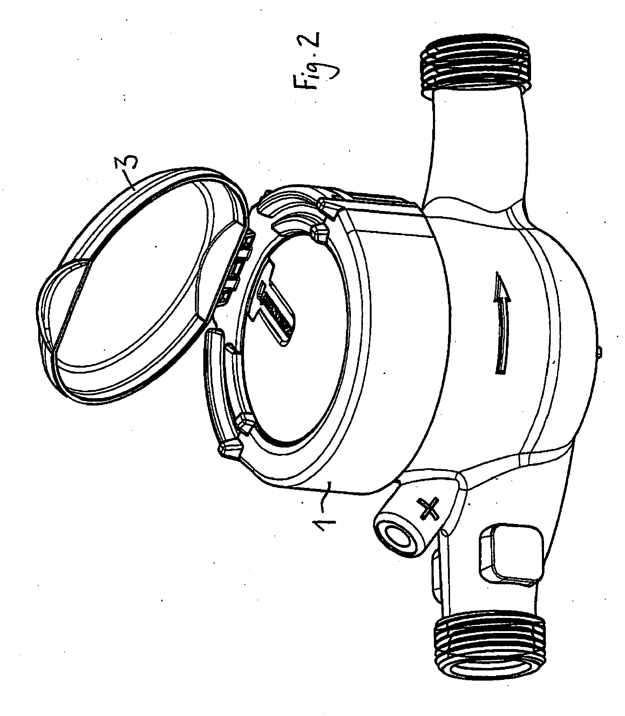

Ein etwa halbkreisförmiges Segment 2 des Rings 1 ist durch Einrasten lösbar befestigt. Nach dem Abnehmen dieses Segmentes 2 kann auf dem Ring 1 ein Standarddeckel 3 klappbar befestigt werden, wie dies aus Fig. 2 ersichtlich ist.

In eine Vertiefung 4 des Ableseglases 5 wird ein Reedschuh 6 eingebracht und an dem Ableseglas 5 durch Verschrauben befestigt. Auf diesen Reedschuh 6 wird eine Abdeckung 7 für den Reedschuh 6 aufgebracht, die sowohl die Oberseite des Reedschuhs 6 schützt als auch das Scharnier 8 für den Deckel 9 mit den Mitteln zum Übertragen der Ablesedaten aufweist. Die Abdeckung 7 für den Reedschuh wird hinter dem Endbereich des Segmentes 2 in dem Scharnierbereich des Rings 1 befestigt.

Der Deckel 9 mit den Mitteln zum Übertragen der Ablesedaten wird dann an dem Scharnier 8 der Abdeckung für den Reedschuh 6 klappbar befestigt. In seinem Inneren sind die Mittel zum Übertragen der Ablesedaten angeordnet, die bevorzugt vergossen sind, um diese vor Flüssigkeit zu schützen. Die beiden Deckelhälften des Deckels 9 können fest miteinander verbunden werden. Die Ablesedaten können von den Mitteln zum Erfassen der Ablesedaten, d.h. dem Reedschuh 6, über ein Kabel oder drahtlos auf die Mittel zum Übertragen der Ablesedaten übermittelt werden.

Es ist zweckmäßig, daß Mittel zum Erkennen von Manipulierversuchen vorgesehen sind. Dies können Mittel zum Erkennen eines Magnetfeldes, Mittel zum Detektieren eines Kabelbruches (im Falle eines Übertragungskabels zwischen den Mitteln zum Erfassen der Ablesedaten und den Mitteln zum Übermitteln der Ablesedaten) oder Mittel zur Detektion eines Entfernens des Deckels mit den Mitteln zum Übertragen der Ablesedaten sein.

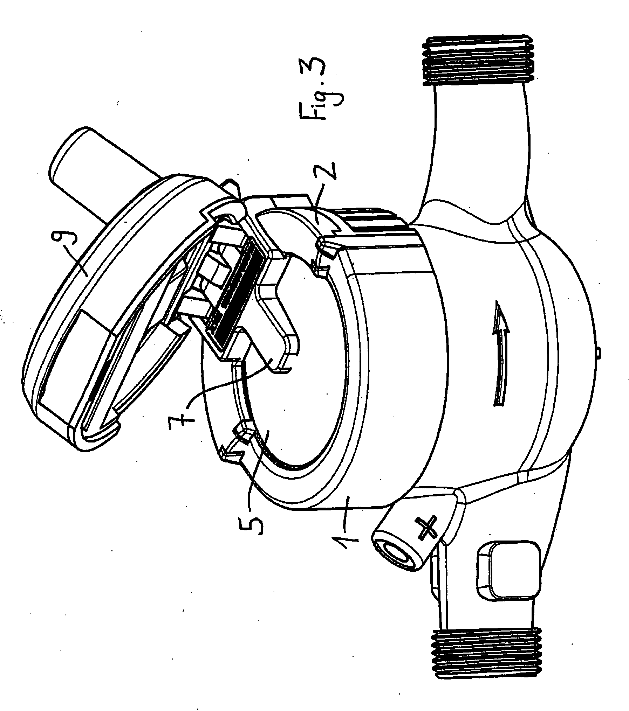

Eine perspektivische Ansicht eines derartigen Wasserzählers ist in Fig. 3 dargestellt.

## Patentansprüche

1. Wasserzähler mit Mitteln zum digitalen Erfassen der Ablesedaten und Mitteln zur Übertragung der Ablesedaten, **dadurch gekennzeichnet, daß** ein erster Ring (1) zum Einrasten auf der Zählerverschraubung vorgesehen ist, daß ein Reedschuh (6) vorgesehen ist, daß eine Abdeckung (7) für den Reedschuh (6) vorgesehen ist, die mit dem Ring (1) verbindbar ist, und daß an der Abdeckung (7) für den Reedschuh (6) ein schwenkbarer Deckel (9) befestigbar ist, in dem die Mittel zum Übertragen der Ablesedaten integriert sind.

2. Wasserzähler gemäß Anspruch 1, **dadurch gekennzeichnet, daß** der Reedschuh (6) in einer Vertiefung im Ableseglas (5) angeordnet ist.

3. Wasserzähler gemäß Anspruch 1 oder Anspruch 2, **dadurch gekennzeichnet, daß** der Reedschuh (6) an dem Ableseglas (5) befestigt ist.

4. Wasserzähler gemäß Anspruch 1, **dadurch gekennzeichnet, daß** ein etwa halbkreisförmiges Segment (2) an der Oberseite des Rings (1) abnehmbar ist und bei abgenommenem Segment (2) ein Scharnier für einen Standarddeckel (3) zugänglich ist.

5. Wasserzähler gemäß Anspruch 1, **dadurch gekennzeichnet, daß** Mittel zum Erkennen von Manipulierversuchen vorgesehen sind.

6. Wasserzähler gemäß Anspruch 1, **dadurch gekennzeichnet, daß** die Mittel zum Erkennen von Manipulierversuchen Mittel zum Erkennen eines Magnetfeldes, Mittel zum Detektieren eines Kabelbruches und/oder Mittel zur Detektion eines Entfernens des Deckels mit den Mitteln zum Übertragen der Ablesedaten umfassen.
